**Europäisches Patentamt**

**European Patent Office**

**Office européen des brevets**

(19)

(11) Numéro de publication: **0 007 253**
**B1**

(12)                    **FASCICULE DE BREVET EUROPEEN**

(45) Date de publication du fascicule du brevet: **29.12.82**       (51) Int. Cl.³: **G 03 B 39/02**

(21) Numéro de dépôt: **79400265.9**

(22) Date de dépôt: **25.04.79**

(54) Procédé et appareillage pour la photographie répétitive d'un sujet en déplacement.

(30) Priorité: **03.05.78 FR 7813117**

(43) Date de publication de la demande:
**23.01.80 Bulletin 80/2**

(45) Mention de la délivrance du brevet:
**29.12.82 Bulletin 82/52**

(84) Etats contractants désignés:
**CH DE GB SE**

(56) Documents cités:
**US - A - 2 920 543**
**US - A - 3 048 093**
**US - A - 3 428 499**
**US - A - 3 719 128**
**US - A - 3 741 098**

(73) Titulaire: **Odier, Marc**
**85 Boulevard Exelmans**
**F-75016 Paris (FR)**

(72) Inventeur: **Odier, Marc**
**85 Boulevard Exelmans**
**F-75016 Paris (FR)**

(74) Mandataire: **Deydier, Bruno et al,**
**CABINET J. BONNET THIRION 95 Bd.**
**Beaumarchais**
**F-75003 Paris (FR)**

Courier Press, Leamington Spa, England.

Accessoire pour appareil photographique propre à la photographie répétitive d'un sujet en déplacement

La présente invention concerne d'une manière générale l'obtention, à l'aide d'un appareil photographique, et sur un même cliché, d'une succession de prises de vue distinctes d'un même sujet en déplacement quelconque vis-à-vis d'un tel appareil photographique.

Par cliché on entend ici un quelconque support photographique, qu'il s'agisse d'un négatif ou d'un positif, et par prise de vue ce qui est enregistré sur ce support lors d'une exposition de celui-ci, que cette exposition affecte la totalité de la surface de ce support ou seulement une partie de cette surface; enfin, par déplacement quelconque vis-à-vis de l'appareil photographique, on entend ici un déplacement qui est autre qu'un simple rapprochement ou éloignement axial et qui implique donc au moins en partie un certain balayage transversal du champ de cet appareil photographique.

Ainsi qu'on le sait, avec un appareil photographique de type conventionnel, il y a, à chaque prise de vue, une exposition globale de la totalité de la surface du cliché concerné, et ce cliché ne contient que des informations relatives à un instant donné, qui est celui de la prise de vue correspondante.

Avec une caméra cinématographique, il est possible d'effectuer une succession de prises de vue distinctes d'un même sujet correspondant chacune respectivement à des instants différents, mais ces prises de vue affectent chacune respectivement des clichés différents, exactement comme si elles avaient été pratiquées successivement à l'aide d'un appareil photographique.

Or, il serait fréquemment intéressant de disposer, sur un même document unique fixe, d'informations relatives à des instants différents et donc, s'agissant de prises de vue photographiques d'un sujet en déplacement, de pouvoir disposer sur un même cliché d'une succession de telles prises de vue distinctes.

Pratiquées avec un appareil photographique de type conventiel, des prises de vue successives, sur un même cliché, d'un sujet en déplacement visé sans discontinuité, impliquent nécessairement, comme rappelé ci-dessus, une impression gobale de la totalité de ce cliché à chaque de vue, et donc, une superposition systématique de ces prises de vue les unes après les autres au fur et à mesure de leur impression, ce qui conduit rapidement à un brouillage de ces prises de vue en rendant la lecture difficile.

Pour pallier cet inconvénient, il à été proposé de longue date, notamment par E. J. MAREY au siècle dernier, d'escamoter systématiquement le décor général devant lequel se déplace le sujet concerné, ce sujet étant par exemple le seul éclairé, ou le seul réfléchissant, et se déplaçant dans un décor général complètement noir.

Un tel processus, bien que pouvant conduire à des résultats remarquables, n'est guère susceptible d'application courante dans la vie quotidienne.

Il en est de même pour le processus mis en oeuvre, également au siècle dernier, par E. J. MUYBRIDGE, suivant lequel, pour l'obtention sur un film fixe d'une série de prises de vue d'un sujet en déplacement, une série d'appareils distincts sont échelonnés le long de ce film et successivement actionnés les uns après les autres au passage dudit sujet.

Pour tourner la difficulté, on peut songer évidemment à des photo-montages, c'est-à-dire à la juxtaposition artificielle sur un même support de plusieurs documents photographiques différents, au détriment des qualités brutes d'un document unique pris sur le vif.

D'autres procédés de photo-montage ou de photo-composition impliquent le plus souvent la mise en oeuvre de matériel complexe, par exemple de masques prenant des positions repérées, et/ou sont en pratique inapplicables à des sujets en déplacement.

Certes, il a déjà été proposé, dans le brevet des Etats-Unis d'Amérique No 3.719.128, de rapporter sur l'objectif d'un appareil photographique une bonnette formant diaphragme, qui est montée rotative sur ledit objectif, et qui en occulte une partie du champ; par rotation de cette bonnette, il est possible de réaliser une succession de prises de vue sur un même cliché.

Mais, cette bonnette formant diaphragme étant simplement montée rotative, ses possibilités d'utilisation sont très réduites; elle ne permet pas de viser en continu un sujet mobile se déplacement suivant un trajet quelconque.

Certes, il a également été déjà proposé, dans le brevet des Etats-Unis d'Amérique No 1.533.433, de rapporter sur un appareil photographique un accessoire comportant une superposition de plaques, dont les bords coopèrent à la définition d'un diaphragme, et qui sont chacune individuellement réglables en position.

Si un tel accessoire est apte à permettre plusieurs prises de vue d'un sujet sur un même cliché entre deux déplacements de ce sujet, il est exclu qu'il puisse en être ainsi sans discontinuité, lors même du déplacement dudit sujet, le nombre de manipulations à effectuer pour ajuster en conséquence le diaphragme en cause s'opposant à une visée en continu de celui-ci.

La présente invention a d'une manière générale pour objet l'excécution, à l'aide d'un appareil photographique, et sur un même cliché, d'une succession de prises de vue d'un quelconque sujet en déplacement quelconque visé sans discontinuité.

De manière plus précise, elle a pour objet un accessoire pour un appareil photographique propre à une telle photographie répétitive d'un sujet en déplacement quelconque.

Cet accessoire, qui est du genre comportant un diaphragme monté mobile dans son plan devant l'objectif de l'appareil photographique est caractérisé en ce qu'il comporte un socle formant une base de réception, sur laquelle peut être fixé l'appareil photographique que sous la commande d'un même organe de manoeuvre unique, le diaphragme est monté mobile en tout sens dans son plan sur ledit socle, devant ladite base de réception, et qu'un repère de visée mobile est couplé en déplacement avec ledit diaphragme mobile.

Certes, un appareil photographique est usuellement équipé d'un diaphragme, et celui-ci est le plus souvent constitué d'une pluralité de plaquettes chacune mobile dans son plan.

Mais, pris globalement, ce diaphragme est fixe, le centre de son ouverture demeurant immobile et au voisinage de l'axe optique de l'objectif de l'appareil, la mobilité des plaquettes qui le constituent n'ayant pour but que d'ajuster périmétriquement la surface de cette ouverture.

En outre, il s'agit d'un diaphragme qui a pour fonction de régler la quantité de flux lumineux pénétrant dans l'appareil à chaque prise de vue, sans interférer sur le champ de cet appareil.

Au contraire, le diaphragme mobile suivant l'invention dont le contour peut être ajustable si désiré, peut avantageusement se déplacer en tout sens dans son plan, c'est-à-dire occuper n'importe quelle position dans ce plan, et il permet donc de suivre en continu le déplacement du sujet visé quel que soit le trajet de celui-ci.

Le diaphragme mobile réduit à chaque instant le champ de l'appareil photographique à celui autorisé par son ouverture, en sorte que, à chaque prise de vue, seule une partie du cliché concerné est impressionnée.

D'une prise de vue à une autre, le fond sur lequel se déplace le sujet visé peut cependant se trouver reconstitué, sans qu'il y ait des superpositions notables de ces prises de vue entre elles de nature à en induire, par surimpression, un affaiblissement de la netteté et des possibilités d'observation.

Ainsi un seul cliché suffit à reconstituer par exemple la trajectoire décrite par un sujet réel se déplaçant en situation dans un décor réel, ce qui ouvre de nombreuses applications, en médecine sportive notamment, la netteté de chaque vue d'un tel cliché autorisant une analyse précise des attitudes et des gestes ainsi que, si désiré, des mesures précises effectuées à partir de détails du décor choisis pour références ou à partir de références introduites à cet effet dans un tel décor.

En outre, le repère de visée prévu suivant l'invention qui est couplé en déplacement au diaphragme mobile, permet à l'usager de suivre plus commodément le sujet à viser, un même organe de manoeuvre, unique, assurant la commande en déplacement dudit repère de visée et dudit diaphragme mobile.

Le diaphragme mobile est de préférence disposé dans un plan situé hors de la zone de netteté d'image pour l'appareil photographique concerne, de manière à ce que la frontière qui en résulte sur le cliché concerné entre la partie impressionnée de celui-ci lors d'une telle prise de vue et la partie laissée à l'écart d'une telle impression demeure avantageusement floue.

Plusieurs zones d'implantation sont cependent possibles pour le diaphragme mobile suivant l'invention; lorsque, par son implantation non seulement il masque une partie du cliché à impressionner, mais encore réduit le flux lumineux propre à l'impression de ce cliché, on tient compte de cette réduction en utilisant pour le cliché concerné des émulsions de sensibilité suffisamment élevée pour se satisfaire de flux lumineux réduit.

Dans tous les cas, l'accessoire suivant l'invention peut avantageusement être mis en oeuvre pour un appareil photographique de type conventionnel, même déjà pré-existant.

Les caractéristiques et avantages de l'invention, ainsi que divers développements de celle-ci, apparaîtront d'ailleurs mieux à la lecture de la description que va suivre, à titre d'exemple, en référence aux dessins schématiques annexés sur lesquels:

la figure 1 est une vue en perspective d'un appareil photographique auquel il est associé un accessoire suivant l'invention;

la figure 2 est une vue en plan de cet accessoire, qui en illustre le schéma optique;

les figures 3A, 3B, 3C sont des vues d'un cliché illustrant l'enregistrement sur celui-ci, suivant l'invention, de trois prises de vue distinctes d'un même sujet en déplacement;

la figure 4 est une vue de ce cliché au terme de cet enregistrement;

la figure 5 est un schéma optique analogue à celui illustré à la figure 2, pour une variante de réalisation de l'accessoire pour appareil photographique suivant l'invention;

la figure 6 est une vue analogue à celle de la figure 1, pour une variante de l'accessoire pour appareil photographique suivant l'invention, représenté équipé d'un tel appareil photographique;

la figure 7 est, à échelle supérieure, une vue en élévation de cet accessoire;

la figure 8 en est un vue latérale, suivant la flèche VIII de la figure 7;

la figure 9 en est une vue partielle en coupe, suivant la ligne IX—IX de la figure 7;

la figure 10 est une vue partielle reprenant un détail de la figure 8, pour une autre variante de réalisation de l'accessoire suivant l'invention;

la figure 11 est une vue partielle en élévation de cette variante, suivant la ligne XI—XI de la figure 10.

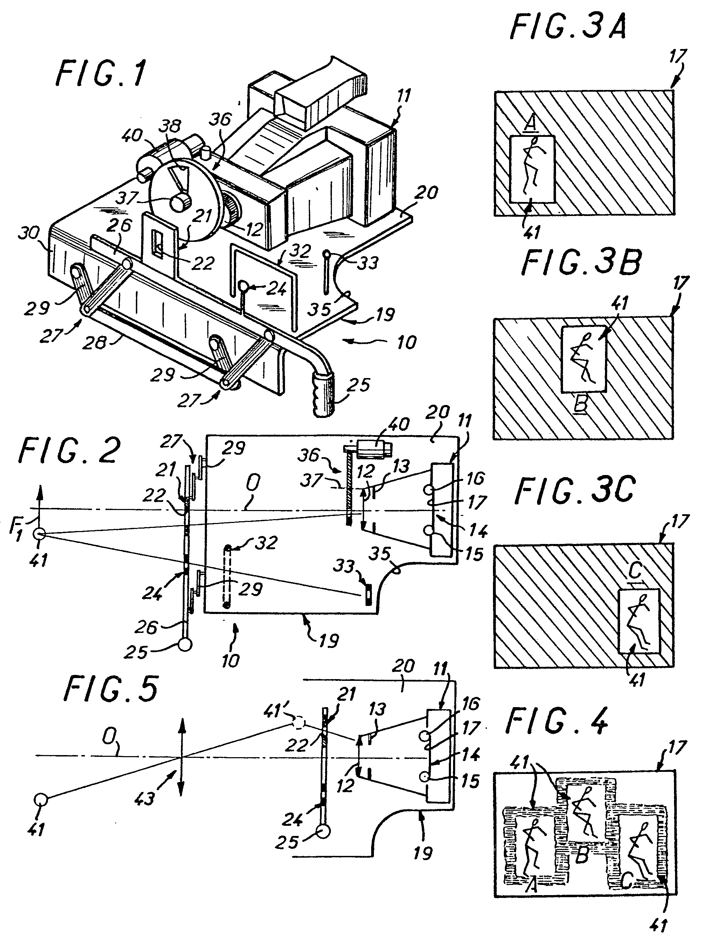

La figure 1 illustre à titre d'exemple l'application de l'invention à la constitution d'un accessoire pour appareil photographique.

Sur cette figure 1, cet accessoire a été désigné par la référence générale 10, et l'appareil photographique auquel il est associé par la référence générale 11.

La constitution d'un tel appareil photographique est bien connue en elle-même, et ne faisant pas partie de la présente invention, elle ne sera pas décrite en détail ici.

Il suffira de rappeler que, tel que schématisé sur les figures 2 et 5, un tel appareil photographique 11 comporte notamment un objectif 12, un diaphragme 13, et un réceptacle propre à la mise en place d'un film à impressionner 14 susceptible par exemple d'être déroulé, cliché par cliché, d'une bobine débitrice 15 à une bobine réceptrice 16.

On a désigné par O sur les figures 2 et 5 l'axe optique de l'objectif 12.

Le diaphragme 13 est fixe, le centre de l'ouverture qu'il comporte se trouvant immuablement sur l'axe optique O de l'objectif 12, quel que soit le développement en surface de cette ouverture, qui est réglable.

De manière usuelle, l'appareil photographique 11 comporte encore un obturateur, et un dispositif propre à commander une avance cliché par cliché du film 14.

Le plus souvent, l'obturateur se trouve verrouillé à chaque prise de vue, et c'est une action sur le dispositif d'avance du film qui en assure le déverrouillage nécessaire à une prise de vue.

Dans ce qui suit, on supposera, pour la commodité de l'exposé, que l'obturateur est bloqué dans la position, dite de pose, pour laquelle il reste en permanence ouvert (ainsi qu'il apparaîtra ci-après, dans l'exemple de réalisation de la figure 1, un autre obturateur lui est substitué).

On supposera également qu'aucune action n'est exercée sur le dispositif d'avance du film 14, en sorte qu'un seul et même cliché 17 de celui-ci reste en permanence fixe dans l'appareil 11, au droit de l'objectif 12, pendant la totalité des prises de vue effectuées.

Dans la forme de réalisation représentée, l'accessoire 10 suivant l'invention comporte un socle 19, qui peut être constitué d'une simple platine, tel que représenté, et qui forme, à l'une de ses extrémités, une base de réception 20 sur laquelle peut être fixé l'appareil photographique 11.

Pour une telle fixation, il est tiré profit du bouton moleté dont est usuellement équipé un appareil photographique pour sa fixation à un quelconque support, un trépied par exemple.

A l'autre extrémité de la platine 19, et donc en avant de la base de réception 20 formée par celle-ci, est disposé, suivant l'invention, un diaphragme 21 monté mobile dans son plan, perpendiculairement par rapport à l'axe optique O de l'objectif 12.

Tel que représenté, il peut s'agir d'une simple plaquette opaque ajourée dans sa zone médiane d'une ouverture 22, et par exemple d'une ouverture de forme rectangulaire.

Ce diaphragme mobile 21 s'étend transversalement vis-à-vis de l'axe optique O de l'objectif 12, et, ainsi interposé à l'avant de l'appareil photographique 11, il en limite en permanence le champ, en ne laissant libre que la fraction de ce champ dépendant de la surface de son ouverture 22; sur la figure 1, et pour ne pas surcharger celle-ci, les dimensions de la plaquette opaque constituant le diaphragme mobile 21 ont été volontairement limitées.

Dans le cas d'une visée directe d'un sujet par l'usager, et tel que représenté, un repère de visée mobile 24 est associé au diaphragme mobile 21 en étant couplé en déplacement avec celui-ci.

Il s'agit, dans l'exemple représenté, d'une simple bague s'étendant transversalement vis-à-vis de l'axe optique O, dans le plan du diaphragme mobile 21.

Le diaphragme mobile 21 et le repère de visée mobile 24 sont sous la commande d'un organe de manoeuvre commun, une simple poignée 25 dans l'exemple représenté, à la disposition de l'usager.

En pratique, et tel que représenté, le diaphragme mobile 21 et le repère de visée mobile 24 sont conjointement portés par une barrette de support 26, dont la poignée 25 est solidaire, à l'une des extrémités de cette barrette, et qui forme l'un des côtés d'un parallélogramme déformable 27, dont le côté opposé 28 est relié au socle 19 par des biellettes parallèles 29 articulées d'une part au côté 28 en question et d'autre part à un rebord 30 que comporte à cet effet ledit socle 19.

Il ressort d'un tel montage que le diaphragme 21 suivant l'invention est mobile en tout sens dans son plan, en pouvant occuper n'importe quelle position dans ce plan, et que les déplacements de ce diaphragme mobile 21 et du repère de visée mobile 24 qui lui est associé sont identiques et synchrones.

Dans l'exemple de réalisation représenté, sont associés au repère de visée mobile 24, d'une part un cadre de visée fixe 32, porté par le socle 19, et d'autre part un repère de visée fixe 33, un simple oeilleton par exemple, également porté par ce socle de l'autre côté du cadre de visée 32 vis-à-vis du repère de visée mobile 24.

Le cadre de visée fixe 32 a de préférence un contour extérieur à l'image du champ de l'appareil photographique 11, c'est-à-dire à l'image du cadre rectangulaire couvert par l'objectif 12 de celui-ci à une distance donnée.

A ce cadre de visée 32 peut avantageusement être associée une grille de repérage, non représentée, réalisée par exemple par une vitre quadrillée ou par un réseau de fils métalliques, et de préférence, cette grille de repérage déborde du cadre de visée 32 pour faciliter à l'opérateur la prise en compte du sujet visé avant qu'il ne pénètre dans ce cadre de visée.

De préférence, également, le cadre visée 32 est interchangeable, pour être adapté à l'objectif 12 mis en oeuvre sur l'appareil photographique 11; par exemple, le socle 19 présente deux trous, dans lesquels peuvent être engagés de manière amovible les piétements d'un tel cadre de visée.

De préférence encore, et tel que représenté, l'oeilleton 33 constituant le repère de visée fixe est implanté au voisinage du bord d'une échancrure 35 du socle 19 pouvant avantageusement servir d'appui-tête; une telle échancrure formant appui-tête peur d'ailleurs par elle-même constituer un repère de visée fixe.

Enfin, étant supposé, dans l'exemple représenté, et comme indiqué ci-dessus, que l'obturatuer de l'appareil 11 est bloqué en position d'ouverture, l'accessoire 10 suivant l'invention comporte en outre un obturateur 36 propre à se substituer à celui, précédent, de l'appareil 11.

Dans l'exemple de réalisation représenté, il s'agit d'un simple disque opaque monté rotatif autour d'un axe 37 parallèle à l'axe optique O de l'objectif 12 et interposé sur cet axe optique, ce disque étant localement ajouré d'un ouverture 38 propre à démasquer ledit objectif 12 à chaque rotation.

Une telle rotation peut être assurée manuellement; en variante, et tel que représenté, elle peut être assurée automatiquement par un moteur 40 dont l'arbre de sortie est au contact de la périphérie du disque 36, et dans ce cas la vitesse de rotation de ce moteur 40 est de préférence réglable.

Suivant une variante de réalisation non représentée, cet obturateur 36 est de type "central" usuel, permettant à l'usager de commander à volonté une itération des prises de vue non périodiques.

Quoi qu'il en soit, s'agissant d'assurer, sur le seul cliché 17, une succession de prises de vue distinctes d'un quelconque sujet en déplacement 41, la mise en oeuvre de l'accessoire suivant l'invention 10 est effectuée de la manière suivante: cet accessoire 10, et donc l'appareil 11 qu'il équipe, est assujetti de manière quelconque appropriée à un support, non représenté, supposé ci-après fixe.

On supposera en outre que l'orientation ainsi donnée à l'appareil photographique 11 est telle que le sujet 41 à viser se déplace sensiblement transversalement vis-à-vis de son axe optique O, tel que schématisé par la flèche F1 de la figure 2 (en fait il peut aussi bien se déplacer obliquement vis-à-vis dudit axe).

L'opérateur, en agissant sur la poignée de manoeuvre 25, s'efforce de maintenir le repère de visée mobile 24 dans l'alignement du repère de visée fixe 33 et du sujet à viser 41 (on notera que, dans l'exemple de réalisation représenté, l'opérateur n'a pas à se servir du viseur normal de l'appareil et que, cependant, à la figure 1, celui-ci a été représenté; suivant une variante de réalisation non représentée, il est possible, par une cinématique appropriée, de reproduire dans ce viseur un déplacement homothétique et synchrone de celui du diaphragme mobile).

A raison du déplacement du sujet visé, il est nécessaire à l'opérateur de déplacer de manière homothétique le repère de visée mobile 24.

Ce déplacement entraîne un déplacement concomitant du diaphragme mobile 21, en sorte que la portion du champ de l'appareil 11 laissée libre par ce diaphragme mobile 21 varie au fur et à mesure des prises de vue effectuées en continu. Si, comme mentionné ci-dessus l'obturateur 36 est de type "central", l'opérateur déclenche par exemple une prise de vue chaque fois que la visée du sujet concerné montre un déplacement appréciable dans le cadre de visée 32, en repérant par exemple ce déplacement grâce à la grille de repérage associée à ce cadre.

Par exemple, pour la première de ces prises de vue, figure 3A, seule est libre la partie de ce champ correspondant à une zone A du cliché 17 disposée au voisinage de l'extrémité inférieure gauche de celui-ci, et donc seule est alors impressionnée cette zone A; pour une deuxième prise de vue, figure 3B, seule est impressionnée une zone B du cliché 17 située sensiblement dans la partie médiane et supérieure de celui-ci; et, pour une troisième prise de vue, figure 3C, la zone C impressionnée du cliché est au voisinage de l'extémité inférieure de droite de celui-ci.

Bien entendu, compte tenu de la structure de l'accessoire 10 suivant l'invention, pour chaque prise de vue le sujet 41 visé, on la partie intéressante de celui-ci, se trouve correctement cadré par le diaphragme mobile 21, en sorte que, sur le cliché 17, figure 4, se trouvent rassemblées trois prises de vue successives A, B, C de ce sujet correspondant à trois instants différents de son parcours.

Par exemple, et tel que schématisé, s'agissant d'un sauteur, la prise de vue A peut correspondre à l'appel, la prise de vue B au saut lui-même, et la prise de vue C à la réception.

Sous réserve bien entendu que les prises de vue soient suffisamment espacées, il n'y a pas chevauchement entre elles de celle-ci malgré qu'elles soient effectuées en continu, en sorte que chacune d'elles se trouve parfaitement claire, sans surimpression vis-à-vis du fond général sur lequel se déplace le sujet 41 concerné.

En effet, à chaque prise de vue, seule est enregistrée la partie de ce fond environnant immédiatement le sujet 41 concerné à l'instant correspondant, le reste étant masqué par le diaphragme mobile 21, tel que schématisé par des hachures sur les figures 3A, 3B, 3C.

Mais, d'une prise de vue à une autre, le fond en question peut, au moins en partie, se trouver reconstitué, comme l'évoque sur la figure 4, le contour flou entourant chaque prise de vue et matérialisant la frontière entre cette prise de vue et le reste du cliché demeuré vierge lors de celle-ci.

En effet, dans ce qui précède, le diaphragme mobile 21 s'étend librement à l'avant de l'appareil photographique 11, sans autre accessoire optique, et il est de préférence à une distance telle de cet appareil il qu'il se situe hors de la zone de netteté d'image donnée sur le cliché 17 par l'objectif 12 de cet appareil, en sorte que la frontière qui en résulte sur ce cliché entre la partie de celui-ci impressionnée à une prise de vue et la partie qui reste masquée est avantageusement floue; en pratique, une telle frontière peut être réduite jusqu'à en être imperceptible, le fond du décor apparaissant alors en continu sur le cliché impressionné.

D'ailleurs il est prévu d'exécuter sur ce cliché non seulement des prises de vue successives du sujet visé, mais encore, à l'extérieur de la trajectoire suivie par celui-ci, des prises de vue du seul fond ou décor sur lequel se déplace ce sujet, pour complètement de ce fond ou décor.

Suivant la variante de réalisation illustrée par la figure 5, le socle 19, qui n'est que partiellement représenté sur cette figure 5 pour simplification de celle-ci, porte encore un dispositif optique 43, disposé au-delà du diaphragme mobile 21 vis-à-vis de la base de réception 20 portant l'appareil photographique 11, et propre à focaliser entre lui et cette base de réception une image 41' du sujet 41 visé.

L'image 41' est formée ou non sur un verre dépoli.

Dans tous les cas, l'objectif 12 de l'appareil 11 reprend cette image 41' pour en focaliser à son tour une image sur le film 14.

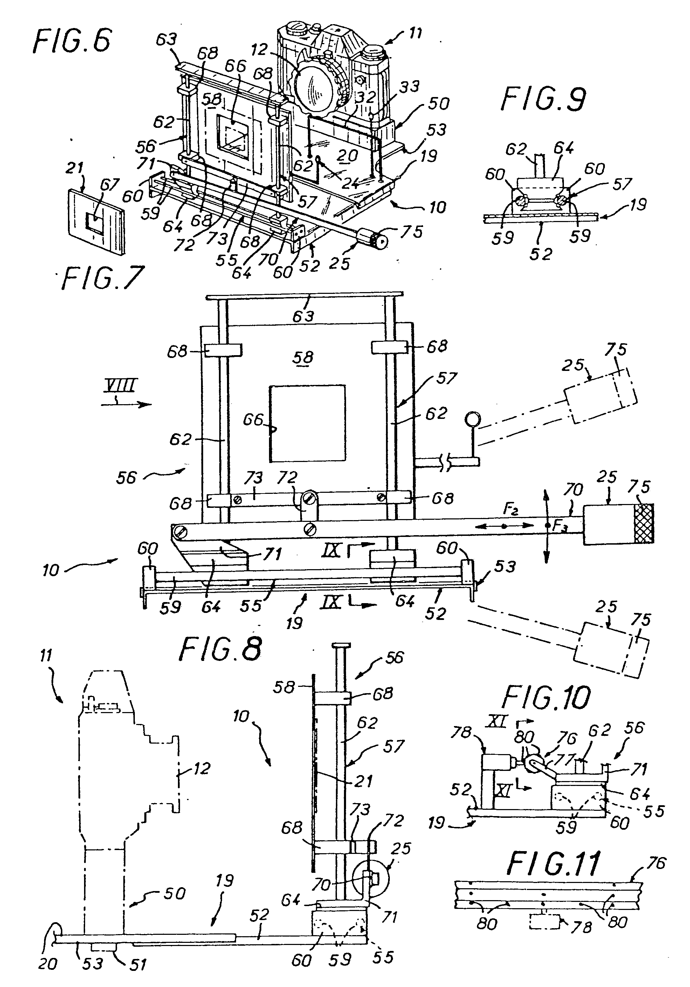

Les figures 6 à 9 concernent une autre variante de réalisation de l'invention.

A la figure 6, en trait plein, et à la figure 8, en traits interrompus, on reconnaît, sus la référence générale 11, un appareil photographique du type "réflex".

La constitution d'un tel appareil photographique est bien connue en elle-même, et ne faisant pas partie de la présente invention, elle ne sera pas décrite en détail ici.

Dans l'exemple de mise en oeuvre de l'invention représenté, à un tel appareil photographique il est associé, de manière connue en soi, un moteur 50, qui permet d'assurer automatiquement une succession de prises de vue, à une cadence réglable pouvant atteindre jusqu'à par exemple 2 à 3,5 images par seconde, sans déplacement du film impressionné.

Comme décrit ci-dessus, l'appareil photographique 11 et son moteur 50, qui forment conjointement un même bloc, sont rapportés sur un accessoire 10 portant, en avant de l'objectif 12 de l'appareil photographique 11, un diaphragme mobile 21.

Dans l'exemple de réalisation représenté, le socle 19 de l'accessoire 10 est formé de deux parties mobiles axialement l'une par rapport à l'autre, à savoir, une partie avant 52, qui porte le diaphragme mobile 21, suivant des modalités décrites plus en détail ultérieurement, et une partie arrière 53, qui forme une base de réception 20 sur laquelle l'appareil photographique 11 et son moteur sont fixés, par exemple à l'aide d'une vis 51, figure 8.

Il est ainsi possible de régler la distance axiale entre le diaphragme mobile 21 et l'objectif 12 de l'appareil photographique 11, en fonction notamment de la nature de cet objectif.

Par exemple, et tel que schématiquement représenté, les parties 52, 53 constitutives du socle 19 se présentent sous forme télescopique, suivant par exemple un montage du type en queue d'aronde (non détaillé sur les figures).

En outre, dans l'exemple de réalisation représenté, le diaphragme mobile 21 est monté coulissant suivant deux directions perpendiculaires vis-à-vis du socle 19 qui le porte et l'axe optique.

A cet effet, la partie avant 52 de ce socle 19 porte un premier guide rectiligne 55, qui s'étend horizontalement, sensiblement perpendiculairement à l'axe optique de l'objectif 12 de l'appareil photographique 11, et sur lequel est monté coulissant un cadre 56, et ce cadre 56 porte lui-même un deuxième guide rectiligne 57, qui s'étend verticalement, vers le haut, perpendiculairement au premier guide 55, et sur lequel est monté coulissant un support 58 porteur du diaphragme mobile 21.

Sur la figure 6, et pour des raisons qui apparaîtront ci-après, ainsi que pour une meilleure clarté de cette figure 6, le diaphragme mobile 21 a été représenté à distance du support 58; il est omis sur la figure 7, et schématisé en traits interrompus sur la figure 8.

Dans l'exemple de réalisation représenté, le guide 55 est constitué de deux barres 59, qui s'étendent parallèlement l'une à l'autre, entre deux flasques 60 solidaires de la partie avant 52 du socle 19.

Le cadre 56 se compose de deux colonnettes 62, qui forment conjointement le guide 57, et qui s'étendent parallèlement l'une à l'autre, en étant entretoisées, à leur partie haute, par une traverse 63.

A leur partie basse, ces colonnettes 62 sont chacune portées par un plot 64 monté coulissant, suivant un montage à double queue d'aronde, sur les barres 59 constituant le guide 55, figures 7 et 9.

Dans l'exemple de réalisation représenté, le support 58 est constitué d'une simple plaquette, sur laquelle le diaphragme mobile 21 est rapporté de manière amovible par exemple par magnétisme.

Par exemple, ce support est en matériau magnétique, ou contient un tel matériau, tandis que le diaphragme mobile 21, qui se présente lui-même, dans l'exemple de réalisation représenté sous la forme d'une simple plaquette, est en métal ferro-magnétique, ou contient un tel métal; par exemple, le diaphragme mobile 12 peut être découpé dans un flan du matériau ferro-magnétique.

En variante, le diaphragme mobile 21 peut être rapporté par adhérence sur le support 58; il peut également être rapporté sur celui-ci par adhésivité, tout ou partie de sa surface portant à cet effet un quelconque matériau adhésif.

Quoi qu'il en soit, le support 58 présente une ouverture 66, et le diaphragme mobile 21, qui présente lui-même une ouverture 67, est rapporté sur le périmètre de l'ouverture 66 de ce support 58, tel que schématisé en traits interrompus à la figure 6.

Quoi qu'il en soit également, le support 58 porte en saillie, dans l'exemple de réalisation représenté, des oreilles 68 par lesquelles il est engagé à coulissement sur les colonnettes 62 constituant le guide 57; il contribue ainsi à l'entretoisement du cadre 56 à la constitution duquel participent ces colonnettes 62.

Comme décrit ci-dessus, le diaphragme mobile 21, et donc, en pratique, dans l'exemple de réalisation représenté, son support 58, est sous le contrôle d'un organe de manoeuvre à la disposition de l'usager, à savoir une simple poignée 25.

Dans l'exemple de réalisation représenté, cette poignée 25 est portée par un levier 70 monté pivotant sur le cadre mobile 56, à la faveur d'un équerre 71 rapportée à cet effet sur l'un des plots 64 appartenant à celui-ci et, par une biellette 72, ce levier 70 est attelé au support 58 du diaphragme mobile 21, ladite biellette étant articulée d'une part au levier 70, à distance de son axe de pivotement, et d'autre par à une barrette 73 reliant l'une à l'autre les deux oreilles 68 inférieure du support 58.

Ainsi qu'il est aisé de le comprendre, par traction ou poussée sur la poignée 25, suivant la double flèche F2 de la figure 7, il est possible de déplacer le cadre mobile 56 le long du guide 55, et donc de déplacer le diaphragme mobile 21 suivant une première direction, et, par pivotement du levier 70 auquel est attelée la poignée 25, suivant la double flèche F3 de la figure 7, et tel que schématisé en traits interrompus sur celle-ci, il est possible de déplacer le support 58 le long du deuxième guide 57, et donc de déplacer le diaphragme mobile 21 suivant une deuxième direction, perpendiculaire à la précédente, en sorte que, dans les limites due débattement qui lui sont ainsi imparties dans un plan, le diaphragme mobile 21 peut occuper, dans ce plan, n'importe quelle position; il est donc bien mobile en tout sens dans son plan.

De préférence, et tel que décrit ci-dessus, un repère de visée mobile 24 est associé au diaphragme mobile 21, et, en correspondance, le socle 19, et plus précisément la partie arrière 53 de celui-ci porte un cadre de visée 32, et un repère de visée fixe 33.

De préférence, le repère de visée mobile 24, qui est porté par le support 58, est sensiblement à niveau avec l'axe optique de l'objectif 12 de l'appareil photographique 11.

La manipulation de l'accessoire 10 décrit en référence aux figure 6 à 8 se fait comme précédemment; cet accessoire 10, qui porte l'appareil photographique 11 et son moteur 50, est assujetti à un support fixe, et, cet appareil photographique 11 utilisant un cliché restant fixe, on exécute, d'un sujet en défilement transversal vis-à-vis de l'axe optique de l'objectif 12 dudit appareil, une succession de prises de vue sur ce même cliché, en suivant continuement ledit sujet à l'aide des repères de visée 24, 33, et en déplaçant donc en conséquence le diaphragme mobile 21, par manoeuvre de la poignée 25.

Ainsi qu'on le notera, le diaphragme 21 est avantageusement interchangeable, en sorte que son ouverture, qui n'est d'ailleurs pas nécessairement rectangulaire ou carrée, peut être adaptée à la configuration générale du sujet à viser.

Suivant un développement de l'invention, le diaphragme mobile 21 est réglable en forme et/ou en dimension, sous le contrôle d'un organe de réglage, pendant une même série de prises de vue.

Il peut s'agir par exemple d'un diaphragme à ouverture circulaire du type de ceux équipant usuellement les appareils photographiques.

Il peut s'agir également d'un diaphragme dont l'ouverture, quadrangulaire, est définie, pour deux côtés opposés par une première paire de plaques coplanaires mobiles dans leur plan en rapprochement ou éloignement mutuel, et, pour les deux côtés opposés, par une deuxième paire de plaques semblables (non représentées sur les figures).

Quoi qu'il en soit, l'organe de réglage propre au contrôle de ce diaphragme mobile 21 est de préférence porté par l'organe de manoeuvre que constitue la poignée 25, par exemple en bout de celle-ci, sous la forme d'une molette montée rotative sur cet organe de manoeuvre, tel que schématisé en 75 sur les figures 6 et 7.

Un diaphragme mobile ainsi réglable permet avantageusement de moduler les dimensions de son ouverture en fonction des dimensions apparentes du sujet visé, qui peut varier en raison du déplacement de celui-ci, compte tenu de la composante de rapprochement ou d'éloignement, à l'égard de l'appareil photographique 11, de ce déplacement.

Comme décrit ci-dessus, le nombre et l'instant des prises de vue successives d'un même sujet sur un même cliché peuvent être laissés à la discrétion de l'opérateur, en fonction notamment de la trajectoire suivie par ce sujet.

Cependant, suivant un développement de l'invention, il est prévu de permettre un déclenchement systématique, et répété, de l'appareil photographique 11, au fur et à mesure du déroulement d'une telle trajectoire, notamment lorsque celle-ci est connue par avance.

A cet effet, et tel que schématiquement illustré par les figures 10 et 11, le cadre mobile 56 est équipé, parallèlement au guide 55 qui le porte, d'une réglette de commande 76 qui, soutenue à ses extrémités par des barrettes 77, s'étend d'un des plots 64 de ce cadre mobile 56 à l'autre, chacune desdites barrettes 77 étant portée par un tel plot.

Dans la forme de réalisation représentée, cette réglette de commande 76 se présente sous la forme d'une barre de section hexagonale, montée rotative, à la maniére d'un barillet, sur les barrettes 77 qui la portent.

En regard de la réglette de commande 76, le socle 19 porte un moyen de commande 78 apte à assurer la commande en déclenchement d'une prise de vue de l'appareil photographique 11 fixé sur ce socle.

Il peut s'agir par exemple d'un simple interrupteur, du type microswitch ou autre, couplé à la commande de cet appareil photographique 11.

Sur celle au moins de ses faces longitudinales qui se trouve en regard de ce moyen de commande 78, la réglette de commande 76 est munie en surface d'une pluralité d'organes de déclenchement 80, répartis longitudinalement le long de cette face, régulièrement ou suivant une loi choisie par l'opérateur.

En pratique, chacune des faces longitudinales de la réglette de commande 76 porte de tels organes de déclenchement 80, suivant des lois différentes.

Par exemple, une répartition régulière étant choisie pour ces organes de déclenchement 80, le nombre de ceux-ci est différent d'une des faces longitudinales de la réglette de commande 76 à l'autre.

Dans le cas où tel que représenté, le moyen de commande 78 est un interrupteur électrique, les organes de déclenchement 80 sont simplement constitués par des bossages ou des cames en saillie sur la réglette de commande 76.

Mais, en variante, le moyen de commande 78 pourrait être par exemple constitué par une cellule photo-électrique, la réglette de commande 76 étant alors creuse et servant de logement à une lampe, et les organes de déclenchement dont est munie en surface cette réglette de commande 76 étant alors formés par des fentes prévues à cet effet transversalement sur les faces longitudinales de cette réglette de commande 76.

Quoi qu'il en soit, le moyen de commande 78 est disposé sur le socle 19 de manière à être actionné à la volée par les organes de déclenchement 80 de la réglette de commande 76, lors du déplacement du cadre mobile 56 portant celle-ci.

Ainsi, les prises de vue successives de l'appareil photographique 11 se trouvent systématiquement assurées lors même du déplacement du diaphragme mobile 21, et au fur et à mesure de ce déplacement, pour la totalité de la course corespondante.

En fonction de la vitesse d'évolution prévue pour le sujet visé, et de la nature de la trajectoire de celui-ci, l'opérateur choisit celle des faces longitudinales de la réglette de commande 76 portant un nombre approprié d'organes de déclenchement 80 et/ou offrant pour ceux-ci une loi de répartition convenable.

Bien entendu, si désiré, le déclenchement des prises de vue peut être automatique, et par exemple périodique, à une cadence pré-choisie par l'opérateur, ou suivant une loi quelconque également choisie par celui-ci.

Quoi qu'il en soit, la durée de chaque prise de vue et la cadence d'itération de telles prises de vue sont de préférence réglables indépendamment l'une de l'autre.

Il est ainsi possible d'ajuster une telle durée en fonction de la lumière, et d'ajuster une telle cadence en fonction par exemple de la vitesse du sujet visé et de son orientation vis-à-vis de l'appareil photographique assurant les prises de vue.

Mais, si désiré, la durée d'une prise de vue peut être réglée à une valeur déterminée.

Suivant un autre développement de l'invention, non illustré sur les figures, le déclenchement automatique des prises de vue peut également être apériodique, en étant assuré en même temps que le déplacement continu du diaphragme mobile, par un dispositif suiveur sensible au déplacement due sujet visé, un dispositif optique ou à ultra-sons par exemple.

La commande en déplacement du diaphragme mobile peut elle-même être assurée de manière automatique convenablement programmée à cet effet, si les déplacements du sujet visé sont exactement prévisibiles, comme c'est le cas par exemple d'un coureur à pied dont la vitesse de déplacement est suffisamment connue à l'avance pour qu'on puisse choisir de manière prédéterminée la vitesse de déplacement à donner en conséquence au diaphragme mobile et la cadence des prises de vue successives à assurer à partir d'un instant donné pris comme origine des temps.

Un automatisme plus élaboré peut en outre être utilisé pour commander automatiquement le déplacement du diaphragme mobile 21 d'après le déplacement du sujet 41 visé lui-même.

Par exemple, l'image mobile de ce sujet sur l'écran d'un iconoscope solidaire de l'appareil photographique concerné peut être détectée et servir de signal commandant le déplacement du diaphragme mobile 21 nécessaire pour que celui-ci suive le sujet visé.

Par ailleurs, s'il s'avère désirable d'améliorer les conditions d'éclairage, il est possible d'utiliser toutes les sources de lumière d'emploi classique en photographie, par exemple du type stroboscope périodique ou flash apériodique. Selon l'invention, il est prévu d'orienter la source de lumière utilisée vers le sujet, en liant cett source de lumière à des moyens de support orientables, et en asservissant en orientation lesdits moyens de support au déplacement du diaphragme mobile.

La présente invention peut par exemple sans inconvénient être appliquée à un appareil "réflex".

Lorsque l'invention est appliquée à la constitution d'un accessoire, celui-ci peut évidemment être incorporé à demeure à un appareil photographique, le socle portant le diaphragme mobile faisant alors par exemple corps avec le boîtier d'un tel appareil.

Que ce socle soit indépendant, ou qu'il fasse corps avec l'appareil concerné, il peut être avantageux, pour en réduire l'encombrement, que le repère de visée fixe soit prévu suivant un grand côté dudit appareil, et non pas suivant un petit côté de celui-ci, tel que plus spécifiquement décrit ci-dessus à titre d'exemple.

Dans tous les cas, et indépendamment des effets artistiques qu'elle permet d'obtenir, l'invention est susceptible d'applications diverses, et notamment, outre son application en médecine sportive déjà mentionnée ci-dessus, d'applications scientifiques, compte tenu des informations de déplacement en fonction du temps qu'elle permet d'obtenir sur un même document fixe permanent.

En particulier, l'invention peut être appliquée aux études de mouvements physiologiques et/ou pathologiques d'un individu, et par exemple à l'étude de la marche d'un sujet claudicant avant et après rééducation de celui-ci.

## Revendications

1. Accessoire pour un appareil photographique (11) propre à la photographie répétitive d'un sujet en déplacement quelconque, du genre comportant un diaphragme (21) monté mobile dans son plan devant l'objectif (12) de l'appareil photographique (11), caractérisé en ce qu'il comporte un socle (19) formant une base de réception (20) sur laquelle peut être fixé l'appareil photographique (11), que, sous la commande d'un même organe de manoeuvre (25), unique, le diaphragme (21) est monté mobile en tout sens dans son plan sur ledit socle (19), devant ladite base de réception (20), et qu'un repère de visée mobile (24) est couplé en déplacement avec ledit diaphragme mobile (21).

2. Accessoire suivant la revendication 1, caractérisé en ce que au repère de visée mobile (24) est associé, d'une part, un cadre de visée fixe (32), éventuellement avec grille de repérage, porté par le socle (19), et d'autre part, un repère de visée fixe (33), un oeilleton par exemple, également porté par le socle (19).

3. Accessoire suivant la revendication 1, caractérisé en ce que le diaphragme mobile (21) et le repère de visée (24) sont conjointement portés par une barrette (26) formant l'un des côtés d'un parallélogramme déformable (27) dont le côté opposé (28) est relié au socle (19) par des biellettes parallèles (29).

4. Accessoire suivant la revendication 1, caractérisé en ce que le diaphragme mobile (21) est monté coulissant suivant deux directions perpendiculaires, le socle (19) portant un premier guide rectiligne (55), sur lequel est monté coulissant un cadre mobile (56), et ledit cadre (56) portant un deuxième guide rectiligne (57), qui s'étend perpendiculairement au premier guide (55), et sur lequel est monté coulissant un support (58) porteur du diaphragme mobile (21), en ce que l'organe de manoeuvre (25) est porté par un levier (70) monté pivotant sur le cadre mobile (56), et, en ce que, par une biellette (72), ce levier (70) est attelé au support (58) du diaphragme (21), ladite biellette (72) étant articulée, d'une part, audit levier (70), à distance de son axe de pivotement, et d'autre part, audit support (58).

5. Accessoire suivant la revendication 4, caractérisé en ce que, parallèlement au guide (55) qui le porte, le cadre mobile (56) est équipé d'une réglette de commande (76) munie en surface d'une pluralité d'organes de déclenchement (80), bossages, cames ou fentes par exemple, répartis longitudinalement le long d'une face longitudinale de cette réglette, et, regard de celle-ci, le socle (19) porte un moyen de commande (78), interrupteur électrique ou cellule photoélectrique par exemple, qui est disposé sur ledit socle (19) de manière à être actionné à la volée par les organes de déclenchement (80) de la réglette de commande (76) lors due déplacement du cadre mobile (56), et que est apte à assurer la commande en prises de vue de l'appareil photographique fixé sur le socle (19).

6. Accessoire suivant la revendication 5, caractérisé en ce que la réglette de commande (76) forme un barillet monté rotatif autour de son axe longitudinal, ledit barillet portant en nombres variés des organes de déclenchement (80) sur au moins deux faces longitudinales distinctes.

7. Accessoire suivant l'une quelconque des revendication 1 à 6, caractérisé en ce que le diaphragme mobile (21) est rapporté de manière amovible sur un support (58), par exemple par magnétisme, adhérence ou adhésivité.

8. Accessoire suivant la revendication 7, caractérisé en ce que l'un quelconque des organes diaphragme (21)-support (58) est en matériau magnétique et l'autre en métal ferromagnétique, ledit support (58) comportant une ouverture (66) sur le périmètre de laquelle est rapporté le diaphragme mobile (21).

9. Accessoire suivant l'une quelconque des revendications 1 à 8, caractérisé en ce que le diaphragme mobile (21) est réglable en forme et/ou dimension sous le contrôle d'un organe de réglage (75), et en ce que ledit organe de réglage (75) est porté par ledit organe de manoeuvre (25), de préférence en bout de celui-ci, par exemple sous la forme d'une molette.

10. Accessoire suivant l'une quelconque des revendications 1 à 9, caractérisé en ce que le socle (19) est formé de deux parties mobiles l'une par rapport à l'autre, par exemple sous forme télescopique, à savoir une partie avant (52), qui porte le diaphragme mobile (21) et une partie arrière (53), qui forme la base de réception (20) pour l'appareil photographique à fixer.

11. Accessoire suivant l'une quelconque des revendication 1 à 10, caractérisé en ce que le socle (19) porte des moyens de support orientables pour une source de lumière, et en ce que lesdits moyens de support sont asservis en orientation au déplacement du diaphragme mobile.

12. Accessoire suivant l'une quelconque des revendications 1 à 11, caractérisé en ce qu'il comporte un dispositif suiveur sensible au déplacement du sujet visé et apte à assurer un déclenchement automatique de prises de vue en même temps que le déplacement continu du diaphragme mobile (21).

13. Accessoire suivant l'une quelconque des revendications 1 à 12, caractérisé en ce que, au-delà du diaphragme mobile (21) vis-à-vis de la base de réception (20), le socle (19) porte encore un dispositif optique (43) propre à focaliser entre lui et ladite base de réception (20) une image du sujet visé.

14. Accessoire suivant l'une quelconque des revendications 1 à 13, caractérisé en ce que, en avant de la base de réception (20), il comporte un obturateur (36) autorisant une itération de prises de vue.

## Claims

1. Accessory for photographic apparatus (11) for repetitive photography of a subject in some sort of motion, of the kind comprising a diaphragm (21) moveably mounted in its plane in front of the objective (12) of the photographic apparatus, characterised in that it comprises a base (19) forming a mount (20) on which the photographic apparatus (11) may be fixed, in that under the control of the same single operating member (25) the diaphragm (21) is moveably mounted in any direction in its plane on the said base (19), in front of the said mount (20) and in that a moveable finder marker (24) is coupled for displacement with the said moveable diaphragm.

2. Accessory according to claim 1, characterised in that with the moveable finder marker (24) is associated, on the one hand, with a fixed finder frame (32), optionally having a reference grid, carried by the base (19) and, on the other hand, with a fixed finder marker (33) an eyelet for example, also carried by the base (19).

3. Accessory according to claim 1, characterized in that the moveable diaphragm (21) and the finder marker (24) are jointly carried by a bar (26) forming one of the sides of a four-bar linkage (27) the opposite side (28) of which is connected to the base (19) by parallel links (29).

4. Accessory according to claim 1, characterised in that the movable diaphragm (21) is slideably mounted in two perpendicular directions, the base (19) carrying a first rectilinear guide (55) on which a moveable frame (56) is slidingly mounted, and the said frame (56) carrying a second rectilinear guide (57) which extends perpendicularly to the first guide (55) and on which is slidingly mounted a support (58) carrying the moveable diaphragm (21), in that the operating member (25) is carried by a lever (70) pivotally mounted on the moveable frame (56) and in that this lever (70) is attached to the support (58) of the diaphragm (21), the said link (72) being articulated on the one hand, with the said lever (70) at a distance from its pivot axis, and, on the other hand, with said support (58).

5. Accessory according to claim 4, characterised in that parallel to the guide (55) which carries it, the moveable frame (56) is equipped with a control strip (76) provided on its surface with a plurality of actuating members (80) for example bosses, cams or slots, distributed longitudinally along a longitudinal face of this strip, and facing the latter, the base (19) carries a control means (78), for example, electrical switch of photoelectric cell, which is disposed on the said base (19) in such a manner as to be actuated in motion by the actuating members (80) of the control bar (76) during displacement of the moveable frame (56), and which is capable of ensuring the picture-taking control of the photographic apparatus fixed on the base (19).

6. Accessory according to claim 5, characterised in that the control bar (76) forms a cylinder rotationally mounted about its longitudinal axis, the said cylinder carrying variable numbers of actuating members (80) on at least two separate longitudinal faces.

7. Accessory according to any one of claims 1 to 6, characterised in that the moveable diaphragm (21) is removably secured on the support (58), for example, by magnetism, adherence or adhesion.

8. Accessory according to claim 8, characterised in that any one of the diaphragm members (21)-support (8) is of magnetic material and the other of ferromagnetic material, the said support (58) comprising an opening (66) on the perimeter of which is secured the moveable diaphragm (21).

9. Accessory according to any one of claims 1 to 8, characterised in that the moveable diaphragm (21) is adjustable in shape and/or size under the control of an adjustment member (75), and in that the said adjustment member (75) is carried by the said operating member (25), preferably at the end thereof, for example, in the form of knurled knob.

10. Accessory according to any one of claims 1 to 9, characterised in that the base (19) is formed of two parts moveable with respect to each other, for example, telescopically namely, a front part (52) which carries the moveable diaphragm (21) and a rear part (53) which forms the mount (20) for the photographic apparatus to be fixed.

11. Accessory according to any of claims 1 to 10, characterised in that the base (19) carries swivel support means for a source of light, and in that said support means are controlled in orientation with the displacement of the moveable diaphragm.

12. Accessory according to any one of claims 1 to 10, characterised in that it comprises a follower device responsive to the motion of the subject aimed at and capable of effecting an automatic picture-taking actuation at the same time as the continuous displacement of the moveable diaphragm (21).

13. Accessory according to any one of claims 1 to 12, characterised in that, beyond the moveable diaphragm (21) relative to the mount (20), the base (19) also carries an optical device (43) for focusing between it and the said mount (20) an image of the subject aimed at.

14. Accessory according to any one of claims 1 to 13, characterised in that, at the front of the mount (20) it comprises a shutter (36) permitting repetitive picture-taking.

**Patentansprüche**

1. Zusatzgerät für ein photographisches Aufnahmegerät (11) zum wiederholten Photographieren eines beweglichen Gegenstandes mit einer in der Ebene vor dem Objektiv (12) des photographischen Aufnahmegeräts beweglich angebrachten Blende (12), dadurch gekennzeichnet, daß eine Grundplatte (19) vorgesehen ist, auf welcher das photographische Aufnahmegerät (11) befestigt werden kann, daß über den Antrieb einer einzigen Steuereinrichtung (25) die Blende (21) nach allen Richtungen in ihrer Ebene vor der Aufnahmeplatte (20) verschiebbar angebracht ist und daß eine bewegliche Zielmarkierung (24) vorgesehen ist, welche mit der beweglichen Blende (21) verschiebbar verbunden ist.

2. Zusatzgerät nach Anspruch 1, dadurch gekennzeichnet, daß der beweglichen Zielmarkierung (24) einerseits ein gegebenenfalls mit einem Zielgitter versehener fester Zielrahmen (32) zugeordnet ist, der auf der Grundplatte (19) angebracht ist, und andererseits eine feste Zielmarkierung (33) beispielsweise als ringförmige Kimme, die ebenfalls auf der Grundplatte (19) angebracht ist.

3. Zusatzgerät nach Anspruch 1 dadurch gekennzeichnet, daß die bewegliche Blende (21) und die Zielmarkierung (24) gemeinsam an einer Verbindungsschiene (26) angebracht sind, welche eine der Seiten eines verformbaren Parellelogramms (27) bildet, dessen gegenüberliegende Seite (28) über parallele Schwingarme (29) mit der Grundplatte (19) verbunden ist.

4. Zusatzgerät nach Anspruch 1, dadurch gekennzeichnet, daß die bewegliche Blende (21) in zwei senkrecht aufeinander stehenden Richtungen verschiebbar angebracht ist, daß an der Grundplatte (19) eine erste gerade Führung (55) angebracht ist, auf welcher ein beweglicher Rahmen (56) verschiebbar vorgesehen ist, daß an dem Rahmen (56) eine zweite gerade Führung (57) angebracht ist, welche sich rechtwinklig zu der ersten Führung (55) erstreckt und auf welcher ein Träger (58) für die bewegliche Blende (21) verschiebbar angebracht ist, daß die Steuereinrichtung (25) über einen Hebel (70) drehbar an dem beweglichen Rahmen (56) angebracht ist, daß der Hebel (70) über einen Schwingarm (72) an dem Träger (58) der Blende (21) befestigt ist und daß der Schwingarm (72) gelenkig gelagert ist einerseits an dem Hebel (70) in Abstand zu dessen Drehachse und andererseits an dem Träger (58).

5. Zusatzgerät nach Anspruch 4, dadurch gekennzeichnet, daß der bewegliche Rahmen (56) parallel zur Führung (55) mit einer Steuerbrücke (76) versehen ist, welche auf der Oberfläche mit einer Vielzahl von Auslösungsorganen (80), beispielsweise Nabenhülsen, Nocken oder Schlitzen, die längs einer Längsfläche der Brücke verteilt sind, ausgebildet ist, daß die Grundplatte (19) gegenüber der Brücke mit einer Steuereinrichtung (78), beispielsweise einem elektrischen Schalter oder einer Photozelle, versehen ist, die auf der Grundplatte (19) angeordnet ist und deren Vorderteil über die Organe der Auslöseeinrichtung (80) der Steuerbrücke (76) bei der Verschiebung des beweglichen Rahmens (56) betätigt wird und mit der die Steuerung der Aufnahmen des an der Grundplatte (19) befestigten photographischen Aufnahmeapparates gewährleistet ist.

6. Zusatzgerät nach Anspruch 5, dadurch gekennzeichnet, daß die Steuerbrücke (76) eineum ihre Längsachse drehbar befestigte Walze aufweist, und daß die Walze mehrere verschiedene Auslöseorgane (80) auf wenigstens zwei verschiedenen Längsseiten aufweist.

7. Zusatzgerät nach einem der Ansprüche 1 bis 6, dadurch gekennzeichnet, daß die bewegliche Blende (21) abnehmbar, beispielsweise über Magnete, Anhaften oder Adhäsionskraft, auf dem Träger (58) angebracht ist.

8. Zusatzgerät nach Anspruch 7, dadurch gekennzeichnet, daß eines der Organe Blende (21)-Träger (28) aus magnetischem Material ist und der andere aus ferromagnetischem Metall und daß der Träger (58) mit einer Öffnung (66) ausgebildet ist, an deren Randbereich die bewegliche Blende (21) angebracht ist.

9. Zusatzgerät nach einem der Ansprüche 1 bis 8, dadurch gekennzeichnet, daß die bewegliche Blende (21) in Form und/oder Größe verstellbar ist mit Hilfe einer Einstelleinrichtung (75) und daß die Einstelleinrichtung (75) an der Steuereinrichtung (25) vorzugsweise an deren Ende beispielsweise in Form eines Rändelrades vorgesehen ist.

10. Zusatzgerät nach einem der Ansprüche 1 bis 9, dadurch gekennzeichnet, daß die Grundplatte (19) aus zwei gegeneinander verschiebbaren, beispielsweise ausziehbaren Teilen besteht, aus einem vorderen Teil (52), auf dem

**0 007 253**

die bewegliche Blende (21) angebracht ist und aus einem hinteren Teil (53), das die Aufnahme oder die Befestigungsplatte (20) für das photographische Aufnahmegerät bildet.

11. Zusatzgerät nach einem der Ansprüche 1 bis 10, dadurch gekennzeichnet, daß die Grundplatte (19) eine einstellbare Befestigungseinrichtung für eine Lichtquelle aufweist und daß die Befestigungseinrichtung in Richtung der Verschiebung der beweglichen Blende gesteuert wird.

12. Zusatzgerät nach einem der Ansprüche 1 bis 11, dadurch gekennzeichnet, daß eine Nachführeinrichtung vorgesehen ist, die auf die Verschiebung des Zielobjekts anspricht und die den automatischen Beginn der Aufnahmen zur gleichen Zeit wie die kontinuierliche Verschiebung der beweglichen Blende (21) gewährleistet.

13. Zusatzgerät nach einem der Ansprüche 1 bis 12, dadurch gekennzeichnet, daß jenseits der beweglichen Blende (21) gegenüber der Aufnahmeplatte (20) an der Grundplatte (19) eine optische Einrichtung (43) vorgesehen ist, mit der ein Bild eines Zielobjekts zwischen der optischen Einrichtung und der Aufnahmeplatte (20) scharf eingestellt werden kann.

14. Zusatzgerät nach einem der Ansprüche 1 bis 13, dadurch gekennzeichnet, daß vor der Aufnahmeplatte (20) eine Verschlußvorrichtung (36) vorgesehen ist, mit der eine Wiederholung der Aufnahme ermöglicht ist.

FIG.3A

FIG.1

FIG.3B

FIG.2

FIG.3C

FIG.5

FIG.4

FIG.6

FIG.7

FIG.8

FIG.9

FIG.10

FIG.11